# EUROPEAN PATENT APPLICATION

(11) **EP 4 498 563 A1**
(43) Date of publication of application: **29.01.2025**
(21) Application number: 23791066.6
(22) Date of filing: 10.04.2023
(51) Int. Cl.: H02J 7/00, H02M 3/04, B60L 53/31, B60L 53/62

(54) **POWER MODULE, CHARGING PILE, AND POWER SUPPLY DEVICE**

(30) Priority: 19.04.2022 CN 202210412184
(71) Applicant: Huawei Digital Power Technologies Co., Ltd., Shenzhen, Guangdong 518043 (CN)
(72) Inventor: CHEN, Jiansheng, Shenzhen, Guangdong 518043 (CN); XIA, Weihong, Shenzhen, Guangdong 518043 (CN); LIU, Yang, Shenzhen, Guangdong 518043 (CN)
(74) Representative: Gill Jennings & Every LLP
(86) International application number: PCT/CN2023/087398
(87) International publication number: WO 2023/202411

(57) **Abstract**

This application provides a power module, a charging pile, and a power supply device. The power module includes a power input end, a first DC/DC power converter, a second DC/DC power converter, a switching unit, and at least two load output ends. A first input end of the first DC/DC power converter and a second input end of the second DC/DC power converter are coupled to a first power supply by using the power input end of the power module, a first output end of the first DC/DC power converter and a second output end of the second DC/DC power converter are coupled to one end of the switching unit, and the other end of the switching unit is coupled to load by using any one of the at least two load output ends of the power module. The switching unit controls the first output end of the first DC/DC power converter and the second output end of the second DC/DC power converter to be coupled to any one of the at least two load output ends of the power module. Low production costs are achieved by implementing this application.

## Description

This application claims priority to Chinese Patent Application No. 202210412184.7, filed with the China National Intellectual Property Administration on April 19, 2022 and entitled "POWER MODULE, CHARGING PILE, AND POWER SUPPLY DEVICE", which is incorporated herein by reference in its entirety.

### TECHNICAL FIELD

This application relates to the field of charging technologies, and in particular, to a power module, a charging pile, and a power supply device.

### BACKGROUND

A power module is obtained by potting power semiconductor components based on a specific function combination. The power module has a power conversion function, and may be widely used in a charging system (for example, a charging pile) and a power supply device.

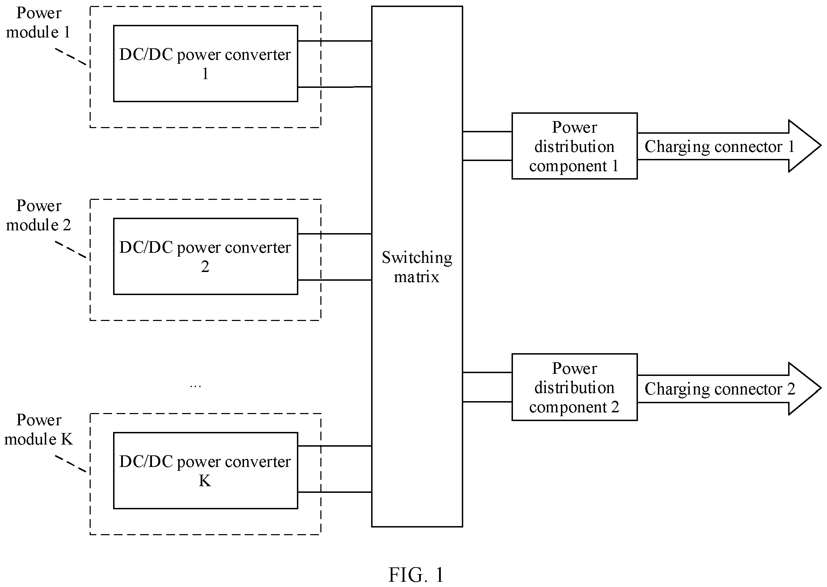

In the conventional technology, a single power module includes only one DC/DC power converter, and an output power of the DC/DC power converter is an output power of the power module. In this case, the power module can output only one power. In FIG. 1, an example in which the power module is used in the charging pile is used. A plurality of power modules (for example, a power module 1, a power module 2, and a power module K) in the conventional technology, and a switching matrix are disposed in a cabinet of the charging pile. The switching matrix may select different power modules to connect to different charging connectors (for example, a charging connector 1 and a charging connector 2), so that the charging connectors can output powers respectively, thereby improving utilization of the charging pile and reducing queuing time of an electric vehicle.

However, as a requirement for the output power of the power module continuously increases, a through-current capability of a component used by the DC/DC power converter also needs to continuously increase. Because costs of the DC/DC power converter increase exponentially with the increase of the through-current capability, production costs for the conventional technology are high.

### SUMMARY

This application provides a power module, a charging pile, and a power supply device, so that through-current capabilities required by components used by DC/DC power converters of the power module can be reduced, production costs are low, and flexibility is good.

According to a first aspect, an embodiment of this application provides a power module. The power module is disposed between a first power supply and a load, and the power module includes a power input end, a first DC/DC power converter, a second DC/DC power converter, a switching unit, and at least two load output ends. The first DC/DC power converter includes a first input end and a first output end, and the second DC/DC power converter includes a second input end and a second output end. In specific implementation, the first input end of the first DC/DC power converter and the second input end of the second DC/DC power converter are coupled to the first power supply by using the power input end of the power module, the first output end of the first DC/DC power converter and the second output end of the second DC/DC power converter are coupled to one end of the switching unit, and the other end of the switching unit is coupled to the load by using any one of the at least two load output ends of the power module. In this case, the first DC/DC power converter and the second DC/DC power converter may convert an output power of the first power supply. The switching unit may control the first output end of the first DC/DC power converter and the second output end of the second DC/DC power converter to be coupled to any one of the at least two load output ends of the power module. Different from that a switching matrix in the conventional technology controls output powers of power modules for output, in embodiments of this application, output powers of DC/DC power converters of the power module are controlled for output. In other words, a controlled object for outputting a power in embodiments of this application is different from that in the conventional technology. For example, in the conventional technology, series-connection and parallel-connection switching is performed between the power modules. In embodiments of this application, the switching unit performs series-connection and parallel-connection switching between the DC/DC power converters in the single power module. In addition, in embodiments of this application, a power of each DC/DC power converter may be altenatively output, and flexibility is good.

In embodiments of this application, a maximum output power of the single power module is a sum of output powers of all DC/DC power converters of the power module. In other words, the maximum output power of the single power module in embodiments of this application may be provided by at least two DC/DC power converters. However, in the conventional technology, an output power of a single power module can be provided by only one DC/DC power converter. In this case, when a maximum power that may be output by the power module in the conventional technology is the same as a maximum power that may be output by the power module in embodiments of this application (for example, the maximum powers are 120 kW), in comparison with a through-current capability required by a component used by the DC/DC power converter of the power module in the conventional technology, through-current capabilities required by components used by the DC/DC power converters of the power module provided in embodiments of this application can be reduced by half. Although a quantity of DC/DC power converters is increased in the power module in embodiments of this application, the through-current capability of the component used by the DC/DC power converter is reduced. Costs increased due to an increase in the through-current capability are far greater than costs increased due to an increase in a quantity of components. For example, a switching transistor with a current capability of 10 A is more expensive than two switching transistors with current capabilities of 5 A. Therefore, in comparison with the conventional technology, production costs of embodiments of this application are lower.

In addition, the power module provided in embodiments of this application may connect the DC/DC power converters in series or in parallel, to provide a high power for a load connected to any output end of the power module. In addition, the power module may alternatively separately provide at least two independent output small powers for loads connected to different output ends of the power module, to be compatible with at least two loads that require fewer powers.

In a specific product form, the power module provided in embodiments of this application is also different from the power module in the conventional technology. It may be understood that each power module is formed through potting. For example, each power module is specifically implemented as a printed circuit board (printed circuit board, PCB), and then placed in a corresponding housing. Different power modules need to be connected through a cable. Different from that a large quantity of cables are required to implement connection switching between the power modules in the conventional technology, connection switching between the DC/DC power converters in embodiments of this application is performed in one power module. Therefore, the DC/DC power converters may be connected through PCB tracing. The tracing is simple, cable usage can be reduced, and costs can be further reduced.

With reference to the first aspect, in a first possible implementation, the first power supply is an alternating current power supply, and the power module further includes an AC/DC converter. That the first input end of the first DC/DC power converter and the second input end of the second DC/DC power converter are coupled to the first power supply by using the power input end of the power module is specifically implemented as: The first input end of the first DC/DC power converter and the second input end of the second DC/DC power converter are coupled to an output end of the AC/DC converter, an input end of the AC/DC converter is coupled to the power input end of the power module, and the power input end of the power module is coupled to the alternating current power supply. In this case, the AC/DC converter may convert an alternating current voltage output by the alternating current power supply into a direct current voltage, and separately provide the direct current voltage for the first DC/DC power converter and the second DC/DC power converter. In embodiments of this application, the AC/DC converter is added to the power module, so that the power module provided in embodiments of this application can be compatible with a scenario in which the first power supply is the alternating current power supply, and applicability is good.

With reference to the first aspect or the first possible implementation of the first aspect, in a second possible implementation, the first DC/DC power converter includes N switching transistors, and the second DC/DC power converter includes M switching transistors, where both N and M are greater than 1. The power module further includes a first micro control unit (micro control unit, MCU). In specific implementation, the first MCU is coupled to a control end of the N switching transistors of the first DC/DC power converter. In this case, the first MCU may control conduction duration of the N switching transistors of the first DC/DC power converter, to control an output power of the first DC/DC power converter. In addition, the first MCU is further coupled to a control end of the M switching transistors of the second DC/DC power converter. In this case, the first MCU may alternatively control conduction duration of the M switching transistors of the second DC/DC power converter, to control an output power of the second DC/DC power converter. In embodiments of this application, the first DC/DC power converter and the second DC/DC power converter in the single power module may share one first MCU, thereby further reducing costs.

With reference to any one of the first aspect or the foregoing possible implementations of the first aspect, in a third possible implementation, the first DC/DC power converter includes the N switching transistors, and the second DC/DC power converter includes the M switching transistors, where both N and M are greater than 1. The power module further includes a second power supply. The second power supply is coupled to a power supply end of the N switching transistors of the first DC/DC power converter. In this case, the second power supply may provide a working voltage for the N switching transistors of the first DC/DC power converter. In addition, the second power supply is further coupled to a power supply end of the M switching transistors of the second DC/DC power converter. In this case, the second power supply may provide a working voltage for the M switching transistors of the second DC/DC power converter. In embodiments of this application, the first DC/DC power converter and the second DC/DC power converter in the single power module may share one working power supply (namely, the second power supply), thereby further reducing costs.

With reference to any one of the first aspect or the foregoing possible implementations of the first aspect, in a fourth possible implementation, the switching unit includes a first switching subunit corresponding to the first DC/DC power converter and a second switching subunit corresponding to the second DC/DC power converter. The at least two load output ends of the power module include a first load output end and a second load output end.

That the switching unit may separately control the first output end of the first DC/DC power converter and the second output end of the second DC/DC power converter to be coupled to any one of the at least two load output ends of the power module may be specifically implemented as: The first switching subunit controls the first output end of the first DC/DC power converter to be coupled to the first load output end of the power module, and the second switching subunit controls the second output end of the second DC/DC power converter to be coupled to the second load output end of the power module.

With reference to the first aspect or the first possible implementation of the first aspect to the third possible implementation of the first aspect, in a fifth possible implementation, the switching unit includes a first switching subunit corresponding to the first DC/DC power converter and a second switching subunit corresponding to the second DC/DC power converter. The at least two load output ends of the power module include a first load output end.

That the switching unit may control the first output end of the first DC/DC power converter and the second output end of the second DC/DC power converter to be coupled to any one of the at least two load output ends of the power module may be specifically implemented as: The first switching subunit controls the first output end of the first DC/DC power converter to be coupled to the first load output end of the power module, and the second switching subunit controls the second output end of the second DC/DC power converter to be coupled to the first load output end of the power module.

With reference to the first aspect or the first possible implementation of the first aspect to the third possible implementation of the first aspect, in a sixth possible implementation, the switching unit includes a first switching subunit corresponding to the first DC/DC power converter and a second switching subunit corresponding to the second DC/DC power converter. The at least two load output ends of the power module include a first load output end, the first load output end has a first load positive output end and a first load negative output end, the first output end of the first DC/DC power converter has a first positive output end and a first negative output end, and the second output end of the second DC/DC power converter has a second positive output end and a second negative output end.

That the switching unit may control the first output end of the first DC/DC power converter and the second output end of the second DC/DC power converter to be coupled to any one of the at least two load output ends of the power module may be specifically implemented as: The first switching subunit controls the first positive output end of the first DC/DC power converter to be coupled to the first load positive output end of the power module, and controls the first negative output end of the first DC/DC power converter to be coupled to the second positive output end of the second DC/DC power converter. The second switching subunit controls the second negative output end of the second DC/DC power converter to be coupled to the first load negative output end of the power module.

With reference to the first aspect or the first possible implementation of the first aspect to the third possible implementation of the first aspect, in a seventh possible implementation, the switching unit includes a first switching subunit corresponding to the first DC/DC power converter. One end of the first switching subunit is coupled to the first output end of the first DC/DC power converter, the other end of the first switching subunit is coupled to one end of a third switching subunit, the other end of the third switching subunit is coupled to a third output end of a third DC/DC power converter, and the third DC/DC power converter and the first DC/DC power converter are not in a same power module.

The at least two load output ends of the power module include a first load output end, the first load output end has a first load positive output end and a first load negative output end, the first output end of the first DC/DC power converter has a first load positive output end and a first load negative output end, and the third output end of the third DC/DC power converter has a third positive output end and a third negative output end.

That the switching unit may control the first output end of the first DC/DC power converter and the second output end of the second DC/DC power converter to be coupled to any one of the at least two load output ends of the power module may be specifically implemented as: The first switching subunit controls the first positive output end of the first DC/DC power converter to be coupled to the first load positive output end of the power module, and controls the first negative output end of the first DC/DC power converter to be coupled to the third positive output end of the third DC/DC power converter. The third switching subunit controls the third negative output end of the third DC/DC power converter to be coupled to the first load negative output end of the power module. In embodiments of this application, DC/DC power converters of different power modules can be controlled to be connected in series, an output power granularity is small, a provided power value is more refined, and flexibility is good.

With reference to any one of the first aspect or the foregoing possible implementations of the first aspect, in a seventh possible implementation, the switching unit may include at least one of a mechanical switch and a semiconductor switch.

According to a second aspect, an embodiment of this application provides a charging pile. The charging pile includes a power module and at least two charging connectors, and the power module includes a power input end, a first DC/DC power converter, a second DC/DC power converter, a switching unit, and at least two load output ends. The first DC/DC power converter includes a first input end and a first output end, and the second DC/DC power converter includes a second input end and a second output end. In specific implementation, the first input end of the first DC/DC power converter and the second input end of the second DC/DC power converter are coupled to a first power supply by using the power input end of the power module, the first output end of the first DC/DC power converter and the second output end of the second DC/DC power converter are coupled to one end of the switching unit, and the other end of the switching unit is coupled to any one of the at least two load output ends of the power module. Any one of the at least two load output ends of the power module is correspondingly coupled to any one of the at least two charging connectors. In this case, the first DC/DC power converter and the second DC/DC power converter may convert an output power of the first power supply. The switching unit may control the first output end of the first DC/DC power converter and the second output end of the second DC/DC power converter to be coupled to any one of the at least two load output ends of the power module. The any charging connector may establish a connection between the any load output end of the power module and an electric vehicle connected to the any charging connector, and provide an output power of the any load output end of the power module for the electric vehicle.

With reference to the second aspect, in a first possible implementation, the first power supply is an alternating current power supply, and the power module further includes an AC/DC converter. That the first input end of the first DC/DC power converter and the second input end of the second DC/DC power converter are coupled to a first power supply by using the power input end of the power module is specifically implemented as: The first input end of the first DC/DC power converter and the second input end of the second DC/DC power converter are coupled to an output end of the AC/DC converter, an input end of the AC/DC converter is coupled to the power input end of the power module, and the power input end of the power module is coupled to the alternating current power supply. In this case, the AC/DC converter may convert an alternating current voltage output by the alternating current power supply into a direct current voltage, and separately provide the direct current voltage for the first DC/DC power converter and the second DC/DC power converter.

With reference to the second aspect or the first possible implementation of the second aspect, in a second possible implementation, the first DC/DC power converter includes N switching transistors, and the second DC/DC power converter includes M switching transistors, where both N and M are greater than 1. The power module further includes a first micro control unit (micro control unit, MCU). In specific implementation, the first MCU is coupled to a control end of the N switching transistors of the first DC/DC power converter. In this case, the first MCU may control conduction duration of the N switching transistors of the first DC/DC power converter, to control an output power of the first DC/DC power converter. In addition, the first MCU is further coupled to a control end of the M switching transistors of the second DC/DC power converter. In this case, the first MCU may alternatively control conduction duration of the M switching transistors of the second DC/DC power converter, to control an output power of the second DC/DC power converter.

With reference to any one of the first aspect or the foregoing possible implementations of the first aspect, in a third possible implementation, the first DC/DC power converter includes the N switching transistors, and the second DC/DC power converter includes the M switching transistors, where both N and M are greater than 1. The power module further includes a second power supply. The second power supply is coupled to a power supply end of the N switching transistors of the first DC/DC power converter. In this case, the second power supply may provide a working voltage for the N switching transistors of the first DC/DC power converter. In addition, the second power supply is further coupled to a power supply end of the M switching transistors of the second DC/DC power converter. In this case, the second power supply may provide a working voltage for the M switching transistors of the second DC/DC power converter.

According to a third aspect, an embodiment of this application provides a power supply device. The power supply device includes a first power supply and the power module according to any one of the first aspect or the possible implementations of the first aspect. The first power supply is coupled to the power module, and the power module may convert an output power of the first power supply.

It should be understood that implementation and beneficial effect of the foregoing aspects of this application may be referred to each other.

### BRIEF DESCRIPTION OF DRAWINGS

FIG. 1 is a schematic diagram of a structure of a charging pile in the conventional technology;
FIG. 2 is a schematic diagram of a structure of a charging pile according to an embodiment of this application;
FIG. 3 is a block diagram of a structure of a power module according to an embodiment of this application;
FIG. 4A and FIG. 4B are schematic diagrams of structures of a switching unit according to an embodiment of this application;
FIG. 5 is block diagram of another structure of a power module according to an embodiment of this application;
FIG. 6 is block diagram of another structure of a power module according to an embodiment of this application;
FIG. 7 is block diagram of another structure of a power module according to an embodiment of this application;
FIG. 8 is block diagram of another structure of a power module according to an embodiment of this application;
FIG. 9 is block diagram of another structure of a power module according to an embodiment of this application;
FIG. 10 is block diagram of another structure of a power module according to an embodiment of this application; and
FIG. 11 is block diagram of another structure of a power module according to an embodiment of this application.

### DESCRIPTION OF EMBODIMENTS

The following clearly and completely describes the technical solutions in embodiments of this application with reference to the accompanying drawings in embodiments of this application. It is clearly that the described embodiments are some but not all of embodiments of this application. All other embodiments obtained by a person of ordinary skill in the art based on embodiments of this application without creative efforts shall fall within the protection scope of this application.

The following further describes implementations of the technical solutions of this application in detail with reference to the accompanying drawings.

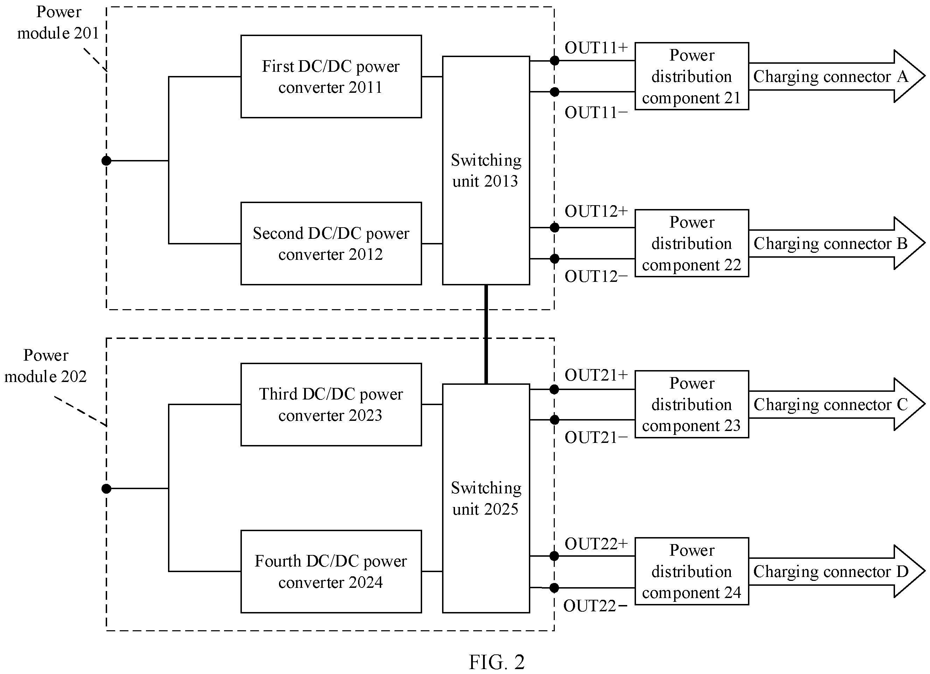

FIG. 2 is a schematic diagram of a structure of a charging pile according to an embodiment of this application. As shown in FIG. 2, the charging pile includes charging connectors (for example, a charging connector A, a charging connector B, a charging connector C, and a charging connector D) and power modules (for example, a power module 201 and a power module 202).

Different from that a power module used by a charging pile includes only one DC/DC power converter in the conventional technology, the power module used by the charging pile provided in embodiments of this application includes at least two DC/DC power converters and a switching unit. For example, the power module 201 includes a first DC/DC power converter 2011, a second DC/DC power converter 2012, and a switching unit 2013. The power module 202 includes a third DC/DC power converter 2023, a fourth DC/DC power converter 2024, and a switching unit 2025.

Optionally, the charging pile may further include power distribution components corresponding to the charging connectors (for example, a power distribution component 21 corresponding to the charging connector A, a power distribution component 22 corresponding to the charging connector B, a power distribution component 23 corresponding to the charging connector C, and a power distribution component 24 corresponding to the charging connector D). The power distribution components may be specifically implemented as at least one of the following: input/output terminals, cables, leakage protection switches, contactors, and fuses.

In specific implementation, the power module 201 and the power module 202 may have at least two load output ends. For example, the power module 201 includes a first load output end (for example, a first load positive output end OUT11+ and a first load negative output end OUT11-) and a second load output end (for example, a second load positive output end OUT12+ and a second load negative output end OUT12-). The power module 202 includes a first load output end (for example, a first load positive output end OUT21+ and a first load negative output end OUT21-) and a second load output end (for example, a second load positive output end OUT22+ and a second load negative output end OUT22-).

The first load positive output end OUT11+ of the power module 201 and the first load negative output end OUT11- of the power module 201 may be coupled to the charging connector A by using the power distribution component 21. The second load positive output end OUT12+ of the power module 201 and the second load negative output end OUT12- of the power module 201 may be coupled to the charging connector B by using the power distribution component 22. The first load positive output end OUT21+ of the power module 202 and the first load negative output end OUT21- of the power module 202 may be coupled to the charging connector C by using the power distribution component 23. The second load positive output end OUT22+ of the power module 202 and the second load negative output end OUT22- of the power module 202 may be coupled to the charging connector D by using the power distribution component 24. It may be understood that an output power of any charging connector is determined by an output power of a load output end that is correspondingly coupled to the any charging connector and that is of a power module, and output powers of load output ends of power modules in embodiments of this application may vary. In other words, a single power module provided in embodiments of this application may output a plurality of powers.

It should be noted that "coupling" described in this application indicates a direct connection or an indirect connection. For example, that x is coupled to y may be that x is directly connected to y, or may be that x is indirectly connected to y by using one or more other electrical components, for example, x is directly connected to z and z is directly connected to y, to implement the connection between x and y by using z.

In some feasible implementations, in the power module 201, the switching unit 2013 may control the first DC/DC power converter 2011 and the second DC/DC power converter 2012 to perform independent outputting. It should be explained that the independent outputting is that the first DC/DC power converter 2011 and the second DC/DC power converter 2012 output powers by using different load output ends of the power module 201 respectively.

In specific implementation, the switching unit 2013 controls a first positive output end of the first DC/DC power converter 2011 to be coupled to the first load positive output end OUT11+ of the power module 201, and controls a first negative output end of the first DC/DC power converter 2011 to be coupled to the first load negative output end OUT11- of the power module 201. In addition, the switching unit 2013 controls a second positive output end of the second DC/DC power converter 2012 to be coupled to the second load positive output end OUT12+ of the power module 201, and controls a second negative output end of the second DC/DC power converter 2012 to be coupled to the second load negative output end OUT12- of the power module 201. In this case, a charging power of the charging connector A is an output power of the first DC/DC power converter 2011. A charging power of the charging connector B is an output power of the second DC/DC power converter 2012.

Similarly, in the power module 202, the switching unit 2025 may control the third DC/DC power converter 2023 and the fourth DC/DC power converter 2024 to perform independent outputting. In this case, the independent outputting is that the third DC/DC power converter 2023 and the fourth DC/DC power converter 2024 output powers by using different load output ends of the power module 202 respectively.

To be specific, the switching unit 2025 controls a third positive output end of the third DC/DC power converter 2023 to be coupled to the first load positive output end OUT21+ of the power module 202, and controls a third negative output end of the third DC/DC power converter 2023 to be coupled to the first load negative output end OUT21- of the power module 202. In addition, the switching unit 2025 controls a fourth positive output end of the fourth DC/DC power converter 2024 to be coupled to the second load positive output end OUT22+ of the power module 202, and controls a fourth negative output end of the fourth DC/DC power converter 2024 to be coupled to the second load negative output end OUT22- of the power module 202. In this case, a charging power of the charging connector C is an output power of the third DC/DC power converter 2023. A charging power of the charging connector D is an output power of the fourth DC/DC power converter 2024.

Optionally, in some feasible implementations, in the power module 201, the switching unit 2013 may control the first DC/DC power converter 2011 and the second DC/DC power converter 2012 to perform parallel outputting. It should be explained that the parallel outputting is that the first DC/DC power converter 2011 and the second DC/DC power converter 2012 output powers by using a same load output end of the power module 201.

In specific implementation, the switching unit 2013 controls a first positive output end of the first DC/DC power converter 2011 to be coupled to the first load positive output end OUT11+ of the power module 201, and controls a first negative output end of the first DC/DC power converter 2011 to be coupled to the first load negative output end OUT11- of the power module 201. In addition, the switching unit 2013 controls a second positive output end of the second DC/DC power converter 2012 to be coupled to the first load positive output end OUT11+ of the power module 201, and controls a second negative output end of the second DC/DC power converter 2012 to be coupled to the first load negative output end OUT11- of the power module 201. In this case, in comparison with the case in which the first DC/DC power converter 2011 and the second DC/DC power converter 2012 perform independent outputting, a charging current of the charging connector A increases. A charging power of the charging connector A is a sum of an output power of the first DC/DC power converter 2011 and an output power of the second DC/DC power converter 2012.

Similarly, in the power module 202, the switching unit 2025 may control the third DC/DC power converter 2023 and the fourth DC/DC power converter 2024 to perform parallel outputting. In this case, the parallel outputting is that the third DC/DC power converter 2023 and the fourth DC/DC power converter 2024 output powers by using a same load output end of the power module 202.

To be specific, the switching unit 2025 controls a third positive output end of the third DC/DC power converter 2023 to be coupled to the first load positive output end OUT21+ of the power module 202, and controls a third negative output end of the third DC/DC power converter 2023 to be coupled to the first load negative output end OUT21- of the power module 202. In addition, the switching unit 2025 controls a fourth positive output end of the fourth DC/DC power converter 2024 to be coupled to the first load positive output end OUT2 1+ of the power module 202, and controls a fourth negative output end of the fourth DC/DC power converter 2024 to be coupled to the first load negative output end OUT21- of the power module 202. In this case, in comparison with the case in which the third DC/DC power converter 2023 and the fourth DC/DC power converter 2024 perform independent outputting, a charging current of the charging connector C increases. A charging power of the charging connector C is a sum of an output power of the third DC/DC power converter 2023 and an output power of the fourth DC/DC power converter 2024.

Optionally, in some feasible implementations, in the power module 201, the switching unit 2013 may control the first DC/DC power converter 2011 and the second DC/DC power converter 2012 to perform serial outputting. It should be explained that the serial outputting is that after a series connection is established between the first DC/DC power converter 2011 and the second DC/DC power converter 2012, the first DC/DC power converter 2011 and the second DC/DC power converter 2012 output powers by using one load output end of the power module 201.

In specific implementation, the switching unit 2013 controls a first negative output end of the first DC/DC power converter 2011 to be coupled to a second positive output end of the second DC/DC power converter 2012. In this case, the first DC/DC power converter 2011 and the second DC/DC power converter 2012 establish the series connection relationship.

For example, the switching unit 2013 may control a first positive output end of the first DC/DC power converter 2011 to be coupled to the first load positive output end OUT11+ of the power module 201, and control a second negative output end of the second DC/DC power converter 2012 to be coupled to the first load negative output end OUT11- of the power module 201. In this case, in comparison with the case in which the first DC/DC power converter 2011 and the second DC/DC power converter 2012 perform independent outputting, a charging voltage of the charging connector A increases. A charging power of the charging connector A is a sum of an output power of the first DC/DC power converter 2011 and an output power of the second DC/DC power converter 2012.

Alternatively, the switching unit 2013 may control a first positive output end of the first DC/DC power converter 2011 to be coupled to the second load positive output end OUT12+ of the power module 201, and control a second negative output end of the second DC/DC power converter 2012 to be coupled to the second load negative output end OUT12- of the power module 201. In this case, a charging voltage of the charging connector B increases. A charging power of the charging connector B is a sum of an output power of the first DC/DC power converter 2011 and an output power of the second DC/DC power converter 2012.

Similarly, in the power module 202, the switching unit 2025 may control the third DC/DC power converter 2023 and the fourth DC/DC power converter 2024 to perform serial outputting. In this case, the serial outputting is that after a series connection is established between the third DC/DC power converter 2023 and the fourth DC/DC power converter 2024, the third DC/DC power converter 2023 and the fourth DC/DC power converter 2024 output powers by using one load output end of the power module 202.

In specific implementation, the switching unit 2025 controls a third negative output end of the third DC/DC power converter 2023 to be coupled to a fourth positive output end of the fourth DC/DC power converter 2024. In this case, the third DC/DC power converter 2023 and the fourth DC/DC power converter 2024 establish the series connection relationship.

For example, the switching unit 2025 may control a third positive output end of the third DC/DC power converter 2023 to be coupled to the first load positive output end OUT21+ of the power module 202, and control a fourth negative output end of the fourth DC/DC power converter 2024 to be coupled to the first load negative output end OUT21-. In this case, in comparison with the case in which the third DC/DC power converter 2023 and the fourth DC/DC power converter 2024 perform independent outputting, a charging voltage of the charging connector C increases. A charging power of the charging connector C is a sum of an output power of the third DC/DC power converter 2023 and an output power of the fourth DC/DC power converter 2024.

Alternatively, the switching unit 2025 may control a third positive output end of the third DC/DC power converter 2023 to be coupled to the second load positive output end OUT22+ of the power module 202, and control a fourth negative output end of the fourth DC/DC power converter 2024 to be coupled to the second load negative output end OUT22- of the power module 202. In this case, a charging voltage of the charging connector D increases. A charging power of the charging connector D is a sum of an output power of the third DC/DC power converter 2023 and an output power of the fourth DC/DC power converter 2024.

Optionally, in some feasible implementations, the switching unit 2013 is coupled to the switching unit 2025, and the DC/DC power converter of the power module 201 and the DC/DC power converter of the power module 202 may perform serial outputting.

For example, the switching unit 2013 may control a first negative output end of the first DC/DC power converter 2011 to be coupled to a third positive output end of the third DC/DC power converter 2023. In this case, the first DC/DC power converter 2011 of the power module 201 and the third DC/DC power converter 2023 of the power module 202 establish the series connection relationship.

The switching unit 2013 may alternatively control a first positive output end of the first DC/DC power converter 2011 to be coupled to any load output end of any power module. In addition, the switching unit 2025 may control a third negative output end of the third DC/DC power converter 2023 to be coupled to the any load output end of the any power module.

An output power of the charging connector C is used as an example. The switching unit 2013 controls the first positive output end of the first DC/DC power converter 2011 to be coupled to the first load positive output end OUT21+ of the power module 202. The switching unit 2025 controls the third negative output end of the third DC/DC power converter 2023 to be coupled to the first load negative output end OUT21- of the power module 202. In this case, a charging voltage of the charging connector C increases. A charging power of the charging connector C is a sum of an output power of the first DC/DC power converter 2011 and an output power of the third DC/DC power converter 2023.

Further, in some feasible implementations, the switching unit 2013 may control a first negative output end of the first DC/DC power converter 2011 to be coupled to a third positive output end of the third DC/DC power converter 2023. The switching unit 2025 may control a third negative output end of the third DC/DC power converter 2023 to be coupled to a fourth positive output end of the fourth DC/DC power converter 2024. In this case, the first DC/DC power converter 2011, the third DC/DC power converter 2023, and the fourth DC/DC power converter 2024 establish a series connection.

The switching unit 2013 may alternatively control a first positive output end of the first DC/DC power converter 2011 to be coupled to any load output end of any power module. In addition, the switching unit 2025 may control a fourth negative output end of the fourth DC/DC power converter 2024 to be coupled to the any load output end of the any power module.

An output power of the charging connector C is used as an example. The switching unit 2013 controls the first positive output end of the first DC/DC power converter 2011 to be coupled to the first load positive output end OUT21+ of the power module 202. The switching unit 2025 controls the fourth negative output end of the fourth DC/DC power converter 2024 to be coupled to the first load negative output end OUT21- of the power module 202. In this case, a charging voltage of the charging connector C increases. A charging power of the charging connector C is a sum of an output power of the first DC/DC power converter 2011, an output power of the third DC/DC power converter 2023, and an output power of the fourth DC/DC power converter 2024.

It may be understood that the charging connectors may be configured to: establish connections between the load output ends of the power modules and an electric vehicle, and provide the power output by the power module for a power battery of the electric vehicle. In this case, a charging connector to which the load output ends of the power converters are coupled may be specifically determined by identifying a charging connector connected to the electric vehicle by a charging pile. An output power of a specific charging connector is not limited in embodiments of this application.

For example, an example in which an output power of a single power module currently needs to reach 120 kW is used. For a structure of a power module used by a charging pile in the conventional technology, 120 kW output by the single power module is mainly provided by one DC/DC power converter. Therefore, a component used by the DC/DC power converter needs to have a through-current capability corresponding to the 120 kW output, and costs are high. However, for the power module used by the charging pile in embodiments of this application, 120 kW output by the single power module may be provided by at least two DC/DC power converters. An example in which one power module includes two DC/DC power converters is used. In comparison with the through-current capability required by the component used by the DC/DC power converter of the power module in the conventional technology, in embodiments of this application, a through-current capability corresponding to a component used by each DC/DC power converter can be reduced by half. Although a quantity of DC/DC power converters is increased in the power module in embodiments of this application, a requirement on the through-current capability of the component used by the DC/DC power converter is reduced. Costs increased due to an increase in the through-current capability are far greater than costs increased due to an increase in a quantity of components. For example, a switching transistor with a current capability of 10A is more expensive than two switching transistors with current capabilities of 5 A. Therefore, in comparison with the conventional technology, production costs of embodiments of this application are lower.

In addition, in the power module used by the charging pile in embodiments of this application, 120 kW is implemented by two DC/DC power converters, and each DC/DC power converter may independently output 60 kW. It is assumed that a charging power required by an electric vehicle is less than or equal to 60 kW. In this case, in the conventional technology, a power module with an output capability of 120 kW provides only a power of 60 kW for the electric vehicle. As a result, utilization of the power module is insufficient, and resource waste is caused. However, different from that one power module with an output capability of 120 kW can charge only one electric vehicle in the conventional technology, the power module in embodiments of this application can simultaneously charge two electric vehicles whose required charging powers are less than or equal to 60 kW. This not only improves charging efficiency of the charging pile, but also improves the utilization of the power module.

In conclusion, the charging pile provided in embodiments of this application can simultaneously provide different output powers, thereby reducing the production costs while ensuring utilization of the charging pile. In addition, the charging pile provided in embodiments of this application can simultaneously meet charging requirements of a plurality of electric vehicles that require different charging powers, and has good flexibility.

It may be understood that, as described above with reference to FIG. 2, that the power module provided in this application is used in the charging pile should be understood as an example, but should not be understood as a limitation. The power module provided in this application may be further applied to a scenario, for example, a photovoltaic power supply scenario or a wind power generation scenario, of another power supply device, for example, a mobile phone charger or a computer adapter.

The following describes a specific structure of the power module 201 provided in embodiments of this application with reference to the accompanying drawings.

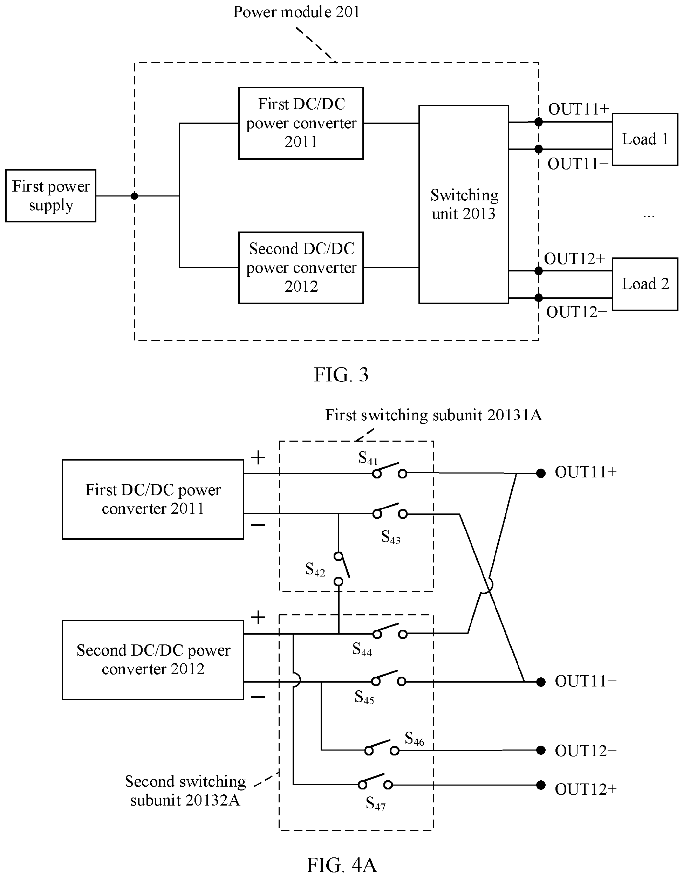

FIG. 3 is a block diagram of a structure of a power module according to an embodiment of this application. As shown in FIG. 3, the power module 201 is disposed between a first power supply and a load, and the power module 201 includes at least two DC/DC power converters and the switching unit 2013.

An example in which the power module 201 includes the first DC/DC power converter 2011 and the second DC/DC power converter 2012 is used. A first input end of the first DC/DC power converter 2011 and a second input end of the second DC/DC power converter 2012 are coupled to the first power supply by using a power input end of the power module 201. A first output end of the first DC/DC power converter 2011 and a second output end of the second DC/DC power converter 2012 are coupled to one end of the switching unit 2013, and the other end of the switching unit 2013 is coupled to the load by using the at least two load output ends of the power module 201. The at least two load output ends of the power module 201 include at least the first load output end (for example, the first load positive output end OUT11+ and the first load negative output end OUT11-), and the second load output end (for example, the second load positive output end OUT12+ and the second load negative output end OUT12-). For example, the other end of the switching unit 2013 is coupled to a load 1 by using the first load positive output end OUT11+ and the first load negative output end OUT11- of the power module 201. The other end of the switching unit 2013 is coupled to a load 2 by using the second load positive output end OUT12+ and the second load negative output end OUT12- of the power module 201.

The first power supply may be a direct power supply, for example, may be a power supply obtained after a power adapter converts, into a direct current, an alternating current output by an alternating current power grid. Alternatively, the first power supply may be an indirect power supply in which a current is transmitted by using a circuit, for example, the circuit may be an upper-level coupling circuit like another DC/DC power converter (for example, a buck converter, a boost converter, a buck-boost converter). Alternatively, the first power supply may be specifically implemented as an energy storage battery. In general, the first power supply shown in FIG. 3 provides the direct current to the DC/DC power converters.

The first DC/DC power converter 2011 and the second DC/DC power converter 2012 may convert an output power of the first power supply. To be specific, the first DC/DC power converter 2011 may convert a first direct current voltage output by the first power supply into a second direct current voltage, and the second DC/DC power converter 2012 may convert the first direct current voltage output by the first direct current power supply into a third direct current voltage. The second direct current voltage may be greater than, less than, or equal to the third direct current voltage.

For example, the DC/DC power converters in embodiments of this application may include but is not limited to the buck converter, the boost converter, the buck-boost converter, an asymmetric half-bridge flyback converter, an asymmetric half-bridge forward converter, and the like.

The switching unit 2013 may control the first output end of the first DC/DC power converter and the second output end of the second DC/DC power converter to be separately coupled to any one of the at least two load output ends of the power module 201.

In some feasible implementations, the switching unit 2013 may control the first positive output end of the first DC/DC power converter 2011 to be coupled to the first load positive output end OUT11+ of the power module 201, and control the first negative output end of the first DC/DC power converter 2011 to be coupled to the first load negative output end OUT11- of the power module 201. In this case, the charging connector A may provide the output power of the first DC/DC power converter 2011 for the load 1. In addition, the switching unit 2013 may alternatively control the second positive output end of the second DC/DC power converter 2012 to be coupled to the second load positive output end OUT12+ of the power module 201, and control the second negative output end of the second DC/DC power converter 2012 to be coupled to the second load negative output end OUT12- of the power module 201. In this case, the charging connector B may provide the output power of the second DC/DC power converter 2012 for the load 2. Optionally, in embodiments of this application, the switching unit 2013 may receive an independent output switching instruction. The independent output switching instruction is specifically: outputting the output power of the first DC/DC power converter 2011 to the charging connector A, and outputting the output power of the second DC/DC power converter 2012 to the charging connector B.

Optionally, in some feasible implementations, the switching unit 2013 may control the first positive output end of the first DC/DC power converter 2011 to be coupled to the first load positive output end OUT11+ of the power module 201, and control the first negative output end of the first DC/DC power converter 2011 to be coupled to the first load negative output end OUT11- of the power module 201. In addition, the switching unit 2013 may alternatively control the second positive output end of the second DC/DC power converter 2012 to be coupled to the first load positive output end OUT11+ of the power module 201, and control the second negative output end of the second DC/DC power converter 2012 to be coupled to the first load negative output end OUT11- of the power module 201. In this case, the current of the charging connector A is a sum of an output current of the first DC/DC power converter 2011 and an output current of the second DC/DC power converter 2012. The charging connector A may provide the sum of the output power of the first DC/DC power converter 2011 and the output power of the second DC/DC power converter 2012 for the load 1. Optionally, in embodiments of this application, the switching unit 2013 may receive a parallel output switching instruction, and the parallel output switching instruction is specifically: After being connected in parallel, the first DC/DC power converter 2011 and the second DC/DC power converter 2012 output the powers to the charging connector A.

Alternatively, the switching unit 2013 may control the first positive output end of the first DC/DC power converter 2011 to be coupled to the second load positive output end OUT12+ of the power module 201, and control the first negative output end of the first DC/DC power converter 2011 to be coupled to the second load negative output end OUT12- of the power module 201. In addition, the switching unit 2013 may alternatively control the second positive output end of the second DC/DC power converter 2012 to be coupled to the second load positive output end OUT12+ of the power module 201, and control the second negative output end of the second DC/DC power converter 2012 to be coupled to the second load negative output end OUT12- of the power module 201. In this case, the current of the charging connector B is a sum of an output current of the first DC/DC power converter 2011 and an output current of the second DC/DC power converter 2012. The charging connector B may provide the sum of the output power of the first DC/DC power converter 2011 and the output power of the second DC/DC power converter 2012 for the load 2. Optionally, in embodiments of this application, the switching unit 2013 may receive a parallel output switching instruction, and the parallel output switching instruction is specifically: After being connected in parallel, the first DC/DC power converter 2011 and the second DC/DC power converter 2012 output the powers to the charging connector B.

Optionally, in some feasible implementations, the switching unit 2013 may control the first negative output end of the first DC/DC power converter 2011 to be coupled to the second positive output end of the second DC/DC power converter 2012. In this case, the power module 201 may provide the sum of the output power of the first DC/DC power converter 2011 and the output power of the second DC/DC power converter 2012 for the load 1 or the load 2.

For example, the switching unit 2013 may alternatively control the first positive output end of the first DC/DC power converter 2011 to be coupled to the first load positive output end OUT11+ of the power module 201, and control the second negative output end of the second DC/DC power converter 2012 to be coupled to the first load negative output end OUT11- of the power module 201. In this case, the voltage of the charging connector A is a sum of an output voltage of the first DC/DC power converter 2011 and an output voltage of the second DC/DC power converter 2012. The charging connector A may provide the sum of the output power of the first DC/DC power converter 2011 and the output power of the second DC/DC power converter 2012 for the load 1. Optionally, in embodiments of this application, the switching unit 2013 may receive a series output switching instruction, and the series output instruction is specifically: After being connected in series, the first DC/DC power converter 2011 and the second DC/DC power converter 2012 output the powers to the charging connector A.

Alternatively, the switching unit 2013 may control the first positive output end of the first DC/DC power converter 2011 to be coupled to the second load positive output end OUT12+ of the power module 201, and control the second negative output end of the second DC/DC power converter 2012 to be coupled to the second load negative output end OUT12- of the power module 201. In this case, the voltage of the charging connector B is a sum of an output voltage of the first DC/DC power converter 2011 and an output voltage of the second DC/DC power converter 2012. The charging connector B may provide the sum of the output power of the first DC/DC power converter 2011 and the output power of the second DC/DC power converter 2012 for the load 2. Optionally, in embodiments of this application, the switching unit 2013 may receive a series output switching instruction, and the series output instruction is specifically: After being connected in series, the first DC/DC power converter 2011 and the second DC/DC power converter 2012 output the powers to the charging connector B.

In some feasible implementations, the independent output switching instruction, the parallel output switching instruction, or the series output switching instruction may be determined by a controller based on a power requirement of a load and output powers obtained after the DC/DC power converters convert the output power of the first power supply.

In specific implementation, the controller may be a micro control unit (micro control unit, MCU), a central processing unit (central processing unit, CPU), another general purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like.

The controller may be disposed in the power module 201, and detect the loads (for example, the load 1 and the load 2) connected to the power module 201. For example, the load is specifically implemented as a power battery of an electric vehicle. The controller may determine a power requirement of the power battery based on a model of the power battery. Alternatively, a battery management system of the electric vehicle may send the power requirement of the power battery to the controller. How to obtain the power requirement of the load is not limited in embodiments of this application, and generation of the switching instructions is not limited.

For example, when the power requirement of the power battery is 120 kW, and both the output power of the first DC/DC power converter 2011 and the output power of the second DC/DC power converter 2012 are 60 kW, the controller may generate the series output switching instruction or the parallel output switching instruction. For example, if the power battery requires a large charging current, the parallel output switching instruction is generated; or if the power battery requires a large charging voltage, the series output switching instruction is generated. Alternatively, when the power requirement of the power battery is 120 kW, and both the output power of the first DC/DC power converter 2011 and the output power of the second DC/DC power converter 2012 are 120 kW, the controller generates the independent output switching instruction. Alternatively, when the power requirement of the power battery is 120 kW, and the output power of the first DC/DC power converter 2011 is 120 kW, regardless of the output power of the second DC/DC power converter 2012, the controller may generate the independent output switching instruction, and specifically control the first output end of the first DC/DC power converter 2011 to be coupled to a load output end of a power module corresponding to a charging connector connected to the power battery.

In comparison with that a switching matrix in the conventional technology controls output powers of power modules for output, in embodiments of this application, the switching unit controls the output powers of the DC/DC power converters of the power module for output. In other words, a controlled object for outputting a power in embodiments of this application is different from that in the conventional technology.

In embodiments of this application, a maximum output power of the single power module is a sum of output powers of all DC/DC power converters of the power module. In other words, the maximum output power of the single power module in embodiments of this application may be provided by at least two DC/DC power converters. However, in the conventional technology, an output power of a single power module can be provided by only one DC/DC power converter. In this case, when a maximum power that may be output by the power module in the conventional technology is the same as a maximum power that may be output by the power module in embodiments of this application (for example, the maximum powers are 120 kW), in comparison with a through-current capability required by a component used by the DC/DC power converter of the power module in the conventional technology, through-current capabilities required by components used by the DC/DC power converters of the power module provided in embodiments of this application can be reduced by half. Costs increased due to an increase in the through-current capability are far greater than costs increased due to an increase in a quantity of components. For example, a switching transistor with a current capability of 10 A is more expensive than two switching transistors with current capabilities of 5 A. Therefore, in comparison with the conventional technology, production costs of the power module provided in embodiments of this application can be reduced.

In addition, the power module provided in embodiments of this application may connect the DC/DC power converters in series or in parallel, to provide a high power for a load connected to any output end of the power module. In addition, the power module may alternatively separately provide at least two independent output small powers for loads connected to different output ends of the power module, to be compatible with at least two loads that require fewer powers.

In a specific product form, the power module provided in embodiments of this application is also different from the power module in the conventional technology. It may be understood that each power module is formed through potting. For example, each power module is specifically implemented as a printed circuit board (printed circuit board, PCB), and then placed in a corresponding housing. Different power modules need to be connected through a cable. Different from that a large quantity of cables are required to implement connection switching between the power modules in the conventional technology, connection switching between the DC/DC power converters in embodiments of this application is performed in one power module. Therefore, the DC/DC power converters may be connected through PCB tracing. The tracing is simple, cable usage can be reduced, and costs can be further reduced.

Optionally, in some possible product forms, the switching unit and the DC/DC power converters may not be on a same PCB board, and may be separately placed on another PCB board. A relative position between the switching unit and the DC/DC power converter is not limited in embodiments of this application.

Optionally, in some feasible implementations, a series connection relationship may also be established between DC/DC power converters of different power modules.

In specific implementation, the switching unit 2013 includes a first switching subunit (not shown in the figure) corresponding to the first DC/DC power converter 2011. One end of the first switching subunit is coupled to the first output end of the first DC/DC power converter 2011, the other end of the first switching subunit is coupled to one end of a third switching subunit, and the other end of the third switching subunit is coupled to a third output end of a third DC/DC power converter. The third DC/DC power converter and the first DC/DC power converter 2011 are not in a same power module (in other words, the third DC/DC power converter is not in the power module 201).

The first switching subunit may control the first positive output end of the first DC/DC power converter 2011 to be coupled to the first load positive output end OUT11+ of the power module 201, and may further control the first negative output end of the first DC/DC power converter 2011 to be coupled to a third positive output end of the third DC/DC power converter. In addition, the third switching sub-switch may control a third negative output end of the third DC/DC power converter to be coupled to the first load negative output end OUT11- of the power module 201. In this case, the voltage of the charging connector A is a sum of the output voltage of the first DC/DC power converter 2011 and an output voltage of the third DC/DC power converter. The charging connector A may provide a sum of the output power of the first DC/DC power converter 2011 and an output power of the third DC/DC power converter for the load 1. Optionally, in embodiments of this application, the first switching subunit may receive a series output switching instruction, and the series output instruction is specifically: After being connected in series, the first DC/DC power converter 2011 and the third DC/DC power converter output the powers to the charging connector A.

In embodiments of this application, output powers obtained after DC/DC power converters of different power modules are connected in series may be provided for a load, so that more output powers of different values can be further provided, and this is compatible with more loads requiring different powers. For example, the output power of the power module provided in embodiments of this application may reach 120 kW. For example, one power module includes two DC/DC power converters, and an output power of each DC/DC power converter reaches 60 kW. If the output power of the third DC/DC power converter may reach 30 kW, a power of 90 kW may be provided for the load in embodiments of this application. In other words, in embodiments of this application, DC/DC power converters of different power modules can be controlled to be connected in series, an output power granularity is small, a provided power value is more refined, and flexibility is good.

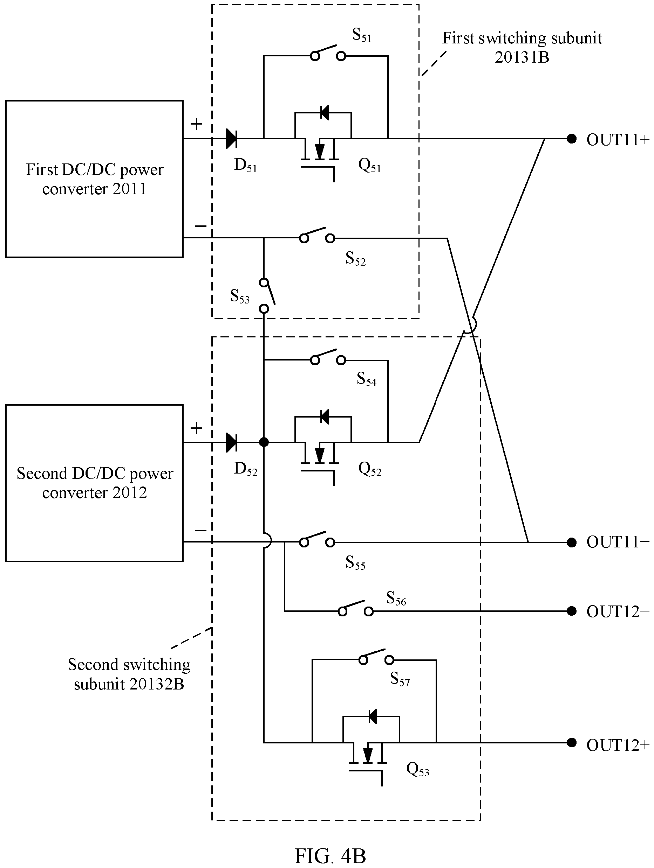

The following uses examples to describe specific structures of the switching unit 2013 with reference to FIG. 4A and FIG. 4B.

In some feasible implementations, FIG. 4A is a schematic diagram of a structure of a switching unit according to an embodiment of this application. As shown in FIG. 4A, the switching unit 2013 includes a first switching subunit 20131A corresponding to the first DC/DC power converter 2011 and a second switching subunit 20132A corresponding to the second DC/DC power converter 2012.

The first output end of the first DC/DC power converter 2011 is coupled to one end of the first switching subunit 20131A, and the second output end of the second DC/DC power converter 2012 is coupled to one end of the second switching subunit 20132A.

For example, the first switching subunit 20131A may specifically include a switch *S*₄₁, a switch *S*₄₂, and a switch *S*₄₃, and the second switching subunit 20132A may specifically include a switch *S*₄₄, a switch *S*₄₅, a switch *S*₄₆, and a switch *S*₄₇.

As shown in FIG. 4A, the first output end of the first DC/DC power converter 2011 has the first positive output end and the first negative output end, and the second output end of the second DC/DC power converter 2012 has the second positive output end and the second negative output end. In specific implementation, the first positive output end of the first DC/DC power converter 2011 is coupled to one end of the switch *S*₄₁. The other end of the switch *S*₄₁ is coupled to the first load positive output end OUT11+ of the power module 201. The first negative output end of the first DC/DC power converter 2011 is coupled to one end of the switch *S*₄₂ and one end of the switch *S*₄₃. The other end of the switch *S*₄₃ is coupled to the first load negative output end OUT11- of the power module 201. The other end of the switch *S*₄₂ is coupled to the second positive output end of the second DC/DC power converter 2012, one end of the switch *S*₄₇, and one end of the switch *S*₄₄. The other end of the switch *S*₄₄ is coupled to the first load positive output end OUT11+ of the power module 201. The other end of the switch *S*₄₇ is coupled to the second load positive output end OUT12+ of the power module 201. The second negative output end of the second DC/DC power converter 2012 is coupled to one end of the switch *S*₄₅ and one end of the switch *S*₄₆. The other end of the switch *S*₄₅ is coupled to the first load negative output end OUT11- of the power module 201. The other end of the switch *S*₄₆ is coupled to the second load negative output end OUT12- of the power module 201.

In some feasible implementations, the first switching subunit 20131A may control the switch *S*₄₁ to be turned on, so that the first positive output end of the first DC/DC power converter 2011 is coupled to the first load positive output end OUT11+ of the power module 201; and control the switch *S*₄₂ to be turned off and the switch *S*₄₃ to be turned on, so that the first negative output end of the first DC/DC power converter 2011 is coupled to the first load negative output end OUT11- of the power module 201. In this case, the output power of the first DC/DC power converter 2011 is provided for the load 1 by using the first load positive output end OUT11+ and the first load negative output end OUT11- of the power module 201.

The second switching subunit 20132A may control the switch *S*₄₄ to be turned off and the switch *S*₄₇ to be turned on, so that the second positive output end of the second DC/DC power converter 2012 is coupled to the second load positive output end OUT12+ of the power module 201; and control the switch *S*₄₅ to be turned off and the switch *S*₄₆ to be turned on, so that the second negative output end of the second DC/DC power converter 2012 is coupled to the second load negative output end OUT12- of the power module 201. In this case, the output power of the second DC/DC power converter 2012 is provided for the load 2 by using the second load positive output end OUT12+ and the second load negative output end OUT12- of the power module 201.

Optionally, in some feasible implementations, the first switching subunit 20131A may control the switch *S*₄₁ to be turned on, so that the first positive output end of the first DC/DC power converter 2011 is coupled to the first load positive output end OUT11+ of the power module 201; and control the switch *S*₄₂ to be turned off and the switch *S*₄₃ to be turned on, so that the first negative output end of the first DC/DC power converter 2011 is coupled to the first load negative output end OUT11- of the power module 201. In this case, the second switching subunit 20132A may control the switch *S*₄₄ to be turned on and the switch *S*₄₇ to be turned off, so that the second positive output end of the second DC/DC power converter 2012 is coupled to the first load positive output end OUT11+ of the power module 201; and control the switch *S*₄₅ to be turned on and the switch *S*₄₆ to be turned off, so that the second negative output end of the second DC/DC power converter 2012 is coupled to the first load negative output end OUT11- of the power module 201. The output power of the first DC/DC power converter 2011 and the output power of the second DC/DC power converter 2012 are provided for the load 2 by using the first load positive output end OUT11+ and the first load negative output end OUT11- of the power module 201.

Optionally, in some feasible implementations, the first switching subunit 20131A may control the switch *S*₄₁ to be turned on, so that the first positive output end of the first DC/DC power converter 2011 is coupled to the first positive output end OUT11+ of the power module 201, and control the switch *S*₄₂ to be turned on and the switch *S*₄₃ to be turned off, so that the first negative output end of the first DC/DC power converter 2011 is coupled to the second positive output end of the second DC/DC power converter 2012. In this case, the second switching subunit 20132A may control the switch *S*₄₄, the switch *S*₄₆, and the switch *S*₄₇ to be turned off, and control the switch *S*₄₃ to be turned on, so that the second negative output end of the second DC/DC power converter 2012 is coupled to the first load negative output end OUT11- of the power module 201. In this case, an output power obtained after the first DC/DC power converter 2011 and the second DC/DC power converter 2012 are connected in series is provided for the load 1 by using the first load positive output end OUT11+ and the first load negative output end OUT11- of the power module 201.

Optionally, in some feasible implementations, FIG. 4B is a schematic diagram of another structure of a switching unit according to an embodiment of this application. As shown in FIG. 4B, the switching unit 2013 includes a first switching subunit 20131B corresponding to the first DC/DC power converter 2011 and a second switching subunit 20132B corresponding to the second DC/DC power converter 2012.

The first output end of the first DC/DC power converter 2011 is coupled to one end of the first switching subunit 20131B, and the second output end of the second DC/DC power converter 2012 is coupled to one end of the second switching subunit 20132B.

For example, the first switching subunit 20131B may specifically include a switching transistor *Q*₅₁, a switch *S*₅₁, a switch *S*₅₂, and a switch *S*₅₃, and the second switching subunit 20132B may specifically include a switching transistor *Q*₅₂, a switch *S*₅₄, a switch *S*₅₅, a switch *S*₅₆, a switching transistor *Q*₅₃, and a switch *S*₅₇.

It should be noted that, in FIG. 4B, an example in which the switching transistor is specifically implemented as a metal-oxide-semiconductor field-effect transistor (metal-oxide-semiconductor field-effect transistor, MOSFET) is used. It may be understood that the switching transistor may alternatively be specifically implemented as a relay, a contactor, an insulated gate bipolar transistor (insulated gate bipolar transistor, IGBT), or the like.

As shown in FIG. 4B, the first output end of the first DC/DC power converter 2011 has the first positive output end and the first negative output end, and the second output end of the second DC/DC power converter 2012 has the second positive output end and the second negative output end. In specific implementation, the first positive output end of the first DC/DC power converter 2011 is coupled to a drain of the switching transistor *Q*₅₁ and one end of the switch *S*₅₁. A source of the switching transistor *Q*₅₁ and the other end of the switch *S*₅₁ are coupled to the first load positive output end OUT11+ of the power module 201. The first negative output end of the first DC/DC power converter 2011 is coupled to one end of the switch *S*₅₂ and one end of the switch *S*₅₃. The other end of the switch *S*₅₂ is coupled to the first load negative output end OUT11- of the power module 201. The other end of the switch *S*₅₃ is coupled to the second positive output end of the second DC/DC power converter 2012, one end of the switch *S*₅₄, a drain of the switching transistor *Q*₅₂, a drain of the switching transistor *Q*₅₃, and one end of the switch *S*₅₇. The other end of the switch *S*₅₄ and a source of the switching transistor *Q*₅₂, are coupled to the first load positive output end OUT11+ of the power module 201. A source of the switching transistor *Q*₅₃ and the other end of the switch *S*₅₇ are coupled to the second load positive output end OUT12+ of the power module 201. The second negative output end of the second DC/DC power converter 2012 is coupled to one end of the switch *S*₅₅ and one end of the switch *S*₅₆. The other end of the switch *S*₅₅ is coupled to the first load negative output end OUT11- of the power module 201. The other end of the switch *S*₅₆ is coupled to the second load negative output end OUT12- of the power module 201.

In some feasible implementations, the first switching subunit 20131B may control the switch *S*₅₁ to be turned on after controlling the switching transistor *Q*₅₁ to be turned on, so that the first positive output end of the first DC/DC power converter 2011 is coupled to the first load positive output end OUT11+ of the power module 201. In addition, the first switching subunit 20131B further controls the switch *S*₅₂ to be turned on and the switch *S*₅₃; to be turned off, so that the first negative output end of the first DC/DC power converter 2011 is coupled to the first load negative output end OUT11- of the power module 201. In this case, the output power of the first DC/DC power converter 2011 is provided for the load 1 by using the first load positive output end OUT11+ and the first load negative output end OUT11- of the power module 201.

Optionally, the first switching subunit 20131B may further specifically include a diode *D*₅₁. An anode of the diode *D*₅₁ is coupled to the first positive output end of the first DC/DC power converter 2011, and a cathode of the diode *D*₅₁ is coupled to the drain of the switching transistor *Q*₅₁. The diode *D*₅₁ may prevent a current of the load 1 from backfeeding to the first DC/DC power converter 2011.

In this case, the second switching subunit 20132B may control the switching transistor *Q*₅₂ to be turned off after controlling the switch *S*₅₄ to be turned off, and control the switch *S*₅₇ to be turned on after controlling the switching transistor *Q*₅₃ to be turned on, so that the first positive output end of the second DC/DC power converter 2012 is coupled to the second load positive output end OUT12+ of the power module 201. In addition, the second switching subunit 20132B further controls the switch *S*₅₅ to be turned off and the switch *S*₅₆ to be turned on, so that the first negative output end of the second DC/DC power converter 2012 is coupled to the second load negative output end OUT12- of the power module 201. In this case, the output power of the second DC/DC power converter 2012 is provided for the load 2 by using the second load positive output end OUT12+ and the second load negative output end OUT12- of the power module 201.

Optionally, in some feasible implementations, the first switching subunit 20131B may control the switch *S*₅₁ to be turned on after controlling the switching transistor *Q*₅₁ to be turned on, so that the first positive output end of the first DC/DC power converter 2011 is coupled to the first load positive output end OUT 11+ of the power module 201. In addition, the first switching subunit 20131B further controls the switch *S*₅₂ to be turned off and the switch *S*₅₃ to be turned on, so that the first negative output end of the first DC/DC power converter 2011 is coupled to the second positive output end of the second DC/DC power converter 2012.

In this case, the second switching subunit may control the switching transistor *Q*₅₂ to be turned off after controlling the switch *S*₅₄ to be turned off. In addition, the second switching subunit 20132B further controls the switching transistor *Q*₅₃ to be turned off after controlling the switch *S*₅₇ to be turned off, and controls the switch *S*₅₅ to be turned on and the switch *S*₅₆ to be turned off, so that the second negative output end of the second DC/DC power converter 2012 is coupled to the first load negative output end OUT11- of the power module 201. In this case, an output power obtained after the first DC/DC power converter 2011 and the second DC/DC power converter 2012 are connected in series is provided for the load 1 by using the first load positive output end OUT11+ and the first load negative output end OUT11- of the power module 201.

Optionally, the second switching subunit 20132B may further specifically include a diode *D*₅₂. An anode of the diode *D*₅₂ is coupled to the second positive output end of the second DC/DC power converter 2012, and a cathode of the diode *D*₅₂ is coupled to the drain of the switching transistor *Q*₅₂. The diode *D*₅₂ may prevent a current of the load 1 from backfeeding to the second DC/DC power converter 2012.

It can be seen that a difference between the structure of the switching subunit shown in FIG. 4B and the structure of the switching subunit shown in FIG. 4A lies in that the first switching subunit 20131B shown in FIG. 4B is a hybrid switch, that is, includes both a semiconductor switch (for example, the switching transistor *Q*₅₁) and a mechanical switch (for example, the switch *S*₅₁). In this case, the switch *S*₅₁ may be controlled to be turned on after the switching transistor *Q*₅₁ is controlled to be turned on. Alternatively, the switching transistor *Q*₅₁ is controlled to be turned off after the switch *S*₅₁ is controlled to be turned off. Therefore, an arc can be avoided in a process of turning on or off the switch *S*₅₁. Similarly, the second switching subunit 20132B shown in FIG. 4B may also be a hybrid switch, for example, include the switching transistor *Q*₅₂ and the switch *S*₅₄. In this case, the switch *S*₅₄ may be controlled to be turned on after the switching transistor *Q*₅₂ is controlled to be turned on. Alternatively, the switching transistor *Q*₅₂ is controlled to be turned off after the switch *S*₅₄ is controlled to be turned off. Therefore, the arc can be avoided in a process of turning on or off the switch *S*₅₇.

In other words, the switching subunits of the switching unit may include at least one of the mechanical switch or the semiconductor switch. A specific implementation form of the switching unit is not limited in embodiments of this application. Another switch, for example, the two ends of the switch *S*₅₂ may also be connected in parallel to the semiconductor switch (not shown in the figure), to avoid the arc in a process of turning on or off the switch *S*₅₂.

In conclusion, a specific quantity of switches included in the switching unit is not limited in embodiments of this application, provided that connection switching between DC/DC power converters can be implemented.

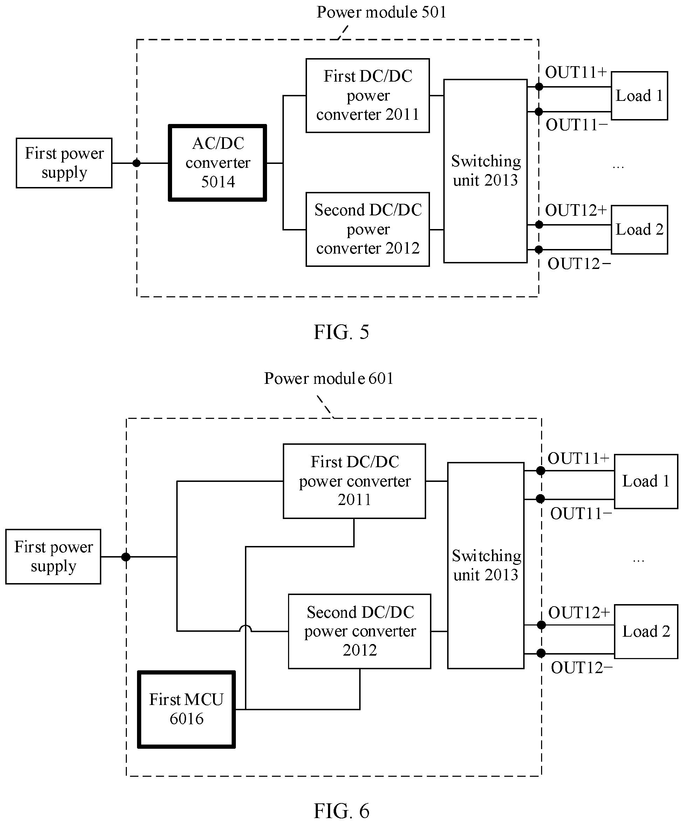

In some feasible implementations, FIG. 5 is a block diagram of another structure of a power module according to an embodiment of this application. As shown in FIG. 5, a power module 501 is disposed between a first power supply and a load, and the first power supply is specifically implemented as an alternating current power supply. For example, the power module 501 may be directly connected to an alternating current power grid.

In this case, in comparison with the power module 201 described above with reference to FIG. 3 to FIG. 4B, the power module 501 further includes an AC/DC converter 5014. Input ends of DC/DC power converters (for example, the first input end of the first DC/DC power converter 2011 and the second input end of the second DC/DC power converter 2012) are coupled to an output end of the AC/DC converter 5014, and an input end of the AC/DC converter 5014 is coupled to the alternating current power supply by using a power input end of the power module 501.

In specific implementation, the AC/DC converter 5014 may convert an alternating current voltage output by the alternating current power supply into a direct current voltage, and separately provide the direct current voltage for the first DC/DC power converter 2011 and the second DC/DC power converter 2012.

For example, the AC/DC converter 5014 may be specifically implemented as a circuit structure, for example, a half-bridge rectification circuit, a full-bridge rectification circuit, or an active inversion circuit.

In embodiments of this application, the AC/DC converter is added to the power module, so that the power module provided in embodiments of this application can be compatible with a scenario in which the first power supply is the alternating current power supply, and applicability is good.

Optionally, in some feasible implementations, FIG. 6 is a block diagram of another structure of a power module according to an embodiment of this application. As shown in FIG. 6, in comparison with the power module 201 described above with reference to FIG. 3 to FIG. 4B, a power module 601 further includes a first micro control unit (micro control unit, MCU) 6016.

In specific implementation, each DC/DC power converter includes at least one switching transistor. For example, the first DC/DC power converter 2011 includes N switching transistors, and the second DC/DC power converter 2012 includes M switching transistors, where both N and M are greater than 1. N and M may be equal or unequal.

A control end of the N switching transistors of the first DC/DC power converter 2011 is coupled to the first MCU 6016. In this case, the first MCU 6016 may control conduction duration of the N switching transistors of the first DC/DC power converter 2011, to control the output power of the first DC/DC power converter 2011.

A control end of the M switching transistors of the second DC/DC power converter 2012 is coupled to the first MCU 6016. In this case, the first MCU 6016 may control conduction duration of the M switching transistors of the second DC/DC power converter 2012, to control the output power of the second DC/DC power converter 2012.

For example, the first MCU 6016 may control the first DC/DC power converter 2011 and the second DC/DC power converter 2012 to output different powers by controlling the conduction duration of the switching transistors of the first DC/DC power converter 2011 and the second DC/DC power converter 2012 to be different.

In general, in embodiments of this application, the first DC/DC power converter and the second DC/DC power converter in the single power module may share one first MCU, thereby further reducing costs.

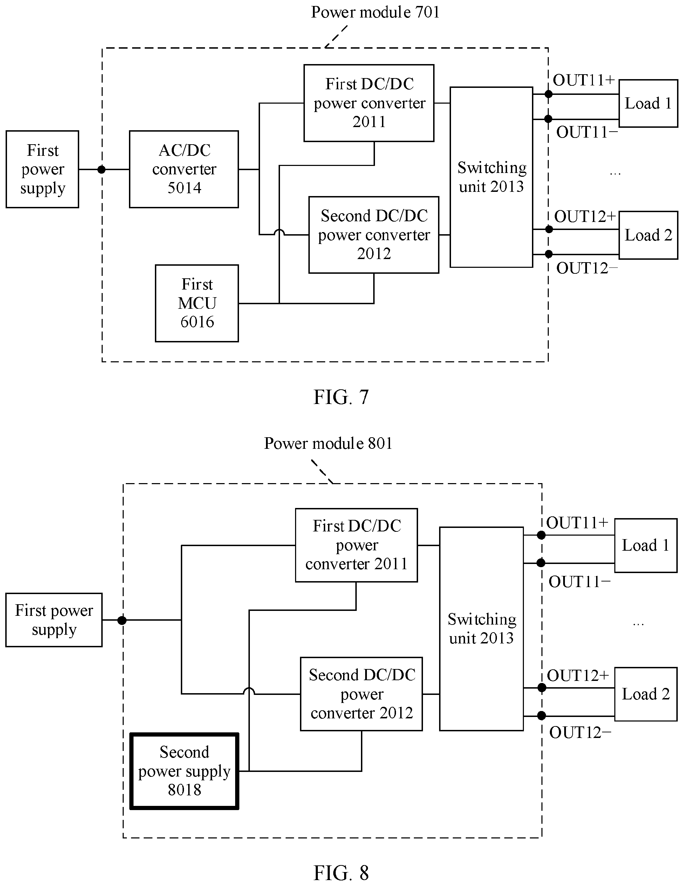

Optionally, in some feasible implementations, a power module 701 shown in FIG. 7 may be obtained with reference to the power module 501 shown in FIG. 5 and the power module 601 shown in FIG. 6. The power module 701 may be used in an alternating current power supply scenario. In addition, a first DC/DC power converter and a second DC/DC power converter in a single power module may share a first MCU. For specific implementation, refer to embodiments described in FIG. 5 and FIG. 6. Details are not described herein again.

Optionally, in some feasible implementations, FIG. 8 is a block diagram of another structure of a power module according to an embodiment of this application. As shown in FIG. 8, in comparison with the power module 201 described above with reference to FIG. 3 to FIG. 4B, a power module 801 further includes a second power supply 8018.

In specific implementation, each DC/DC power converter includes at least one switching transistor. For example, the first DC/DC power converter 2011 includes N switching transistors, and the second DC/DC power converter 2012 includes M switching transistors, where both N and M are greater than 1. N and M may be equal or unequal.

A power supply end of the N switching transistors of the first DC/DC power converter 2011 is coupled to the second power supply 8018. In this case, the second power supply 8018 provides a working voltage for the N switching transistors of the first DC/DC power converter 2011.

A power supply end of the M switching transistors of the second DC/DC power converter 2012 is coupled to the second power supply 8018. In this case, the second power supply 8018 provides a working voltage for the M switching transistors of the second DC/DC power converter 2012.

For example, the second power supply 8018 may be specifically implemented as an indirect power supply in which a current is transmitted by using a circuit, for example, may be an amplification circuit and a direct-current conversion circuit with an isolation function.

In general, in embodiments of this application, the first DC/DC power converter and the second DC/DC power converter in the single power module may share one working power supply (namely, the second power supply), thereby further reducing costs.

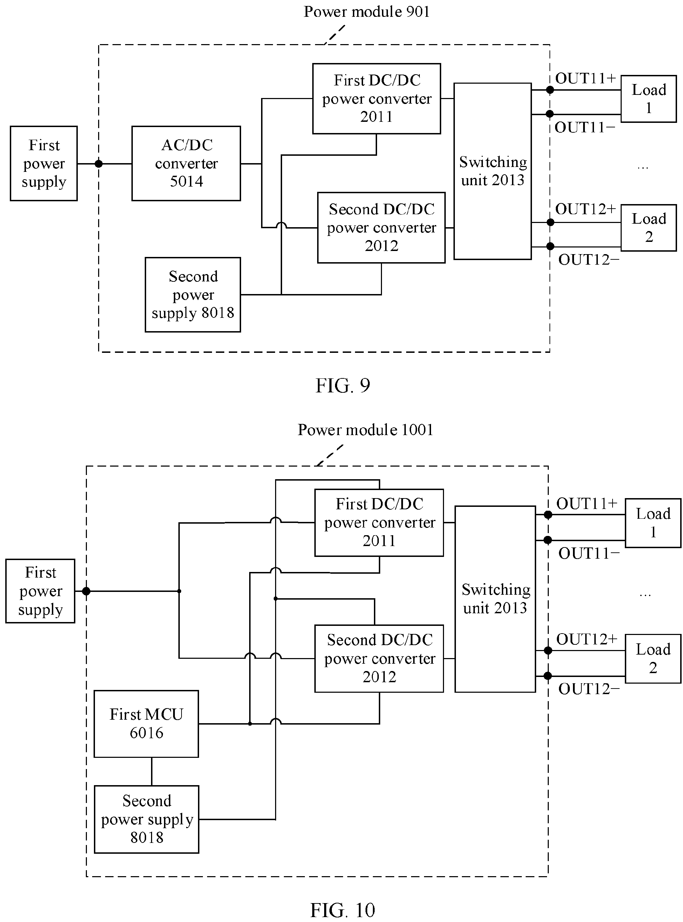

Optionally, in some feasible implementations, a power module 901 shown in FIG. 9 may be obtained with reference to the power module 501 shown in FIG. 5 and the power module 801 shown in FIG. 8. The power module 901 may be used in an alternating current power supply scenario. In addition, a first DC/DC power converter and a second DC/DC power converter in a single power module may share a second power supply. For specific implementation, refer to embodiments described in FIG. 5 and FIG. 8. Details are not described herein again.

Optionally, in some feasible implementations, a power module 1001 shown in FIG. 10 may be obtained with reference to the power module 601 shown in FIG. 6 and the power module 801 shown in FIG. 8. A first DC/DC power converter and a second DC/DC power converter in the power module 1001 may share a first MCU and a second power supply. For specific implementation, refer to embodiments described in FIG. 6 and FIG. 8. Details are not described herein again.

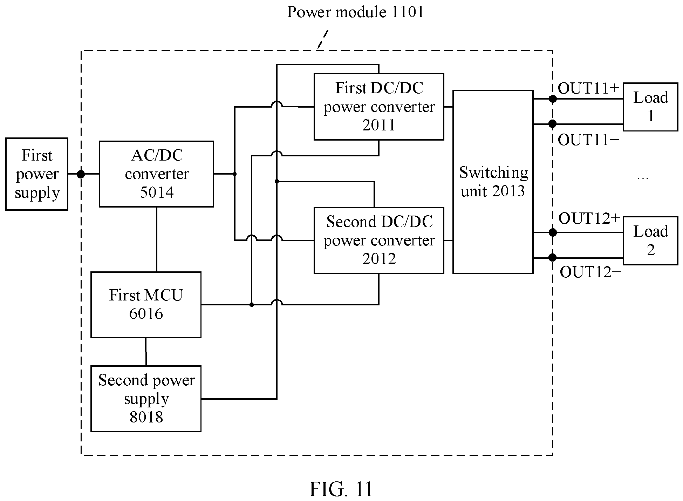

Optionally, in some feasible implementations, a power module 1101 shown in FIG. 11 may be obtained with reference to the power module 501 shown in FIG. 5, the power module 601 shown in FIG. 6, and the power module 801 shown in FIG. 8. The power module 1101 may be used in an alternating current power supply scenario. In addition, a first DC/DC power converter and a second DC/DC power converter in a single power module may share a first MCU and a second power supply. For specific implementation, refer to embodiments described in FIG. 5, FIG. 6, and FIG. 8. Details are not described herein again.

It should be noted that, the terms "first" and "second" are used for descriptive purposes only, and cannot be construed as indicating or implying relative importance.

The foregoing description is merely a specific implementation of the present invention, but is not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A power module, wherein the power module is disposed between a first power supply and a load, and the power module comprises a power input end, a first DC/DC power converter, a second DC/DC power converter, a switching unit, and at least two load output ends, wherein the first DC/DC power converter comprises a first input end and a first output end, and the second DC/DC power converter comprises a second input end and a second output end;
the first input end of the first DC/DC power converter and the second input end of the second DC/DC power converter are coupled to the first power supply by using the power input end of the power module, the first output end of the first DC/DC power converter and the second output end of the second DC/DC power converter are coupled to one end of the switching unit, and the other end of the switching unit is coupled to the load by using any one of the at least two load output ends of the power module;
the first DC/DC power converter and the second DC/DC power converter are configured to convert an output power of the first power supply; and
the switching unit is configured to control the first output end of the first DC/DC power converter and the second output end of the second DC/DC power converter to be coupled to any one of the at least two load output ends of the power module.

2. The power module according to claim 1, wherein the first power supply is an alternating current power supply, and the power module further comprises an AC/DC converter; and
that the first input end of the first DC/DC power converter and the second input end of the second DC/DC power converter are coupled to the first power supply by using the power input end of the power module specifically comprises:
the first input end of the first DC/DC power converter and the second input end of the second DC/DC power converter are coupled to an output end of the AC/DC converter, an input end of the AC/DC converter is coupled to the power input end of the power module, and the power input end of the power module is coupled to the alternating current power supply; and
the AC/DC converter is configured to: convert an alternating current voltage output by the alternating current power supply into a direct current voltage, and separately provide the direct current voltage for the first DC/DC power converter and the second DC/DC power converter.

3. The power module according to claim 1 or 2, wherein the first DC/DC power converter comprises N switching transistors, and the second DC/DC power converter comprises M switching transistors, wherein both N and M are greater than 1;
the power module further comprises a first micro control unit (micro control unit, MCU);
the first MCU is coupled to a control end of the N switching transistors of the first DC/DC power converter, and the first MCU is configured to control conduction duration of the N switching transistors of the first DC/DC power converter, to control an output power of the first DC/DC power converter; and
the first MCU is further coupled to a control end of the M switching transistors of the second DC/DC power converter, and the first MCU is further configured to control conduction duration of the M switching transistors of the second DC/DC power converter, to control an output power of the second DC/DC power converter.

4. The power module according to any one of claims 1 to 3, wherein the first DC/DC power converter comprises the N switching transistors, and the second DC/DC power converter comprises the M switching transistors, wherein both N and M are greater than 1;
the power module further comprises a second power supply;
the second power supply is coupled to a power supply end of the N switching transistors of the first DC/DC power converter, and the second power supply is configured to provide a working voltage for the N switching transistors of the first DC/DC power converter; and
the second power supply is further coupled to a power supply end of the M switching transistors of the second DC/DC power converter, and the second power supply is further configured to provide a working voltage for the M switching transistors of the second DC/DC power converter.

5. The power module according to any one of claims 1 to 4, wherein the switching unit comprises a first switching subunit corresponding to the first DC/DC power converter and a second switching subunit corresponding to the second DC/DC power converter, wherein the at least two load output ends of the power module comprise a first load output end and a second load output end; and
that the switching unit is configured to control the first output end of the first DC/DC power converter and the second output end of the second DC/DC power converter to be coupled to any one of the at least two load output ends of the power module specifically comprises:
the first switching subunit is configured to control the first output end of the first DC/DC power converter to be coupled to the first load output end of the power module, and the second switching subunit is configured to control the second output end of the second DC/DC power converter to be coupled to the second load output end of the power module.

6. The power module according to any one of claims 1 to 4, wherein the switching unit comprises a first switching subunit corresponding to the first DC/DC power converter and a second switching subunit corresponding to the second DC/DC power converter, wherein the at least two load output ends of the power module comprise a first load output end; and
that the switching unit is configured to control the first output end of the first DC/DC power converter and the second output end of the second DC/DC power converter to be coupled to any one of the at least two load output ends of the power module specifically comprises:
the first switching subunit is configured to control the first output end of the first DC/DC power converter to be coupled to the first load output end of the power module, and the second switching subunit is configured to control the second output end of the second DC/DC power converter to be coupled to the first load output end of the power module.

7. The power module according to any one of claims 1 to 4, wherein the switching unit comprises a first switching subunit corresponding to the first DC/DC power converter and a second switching subunit corresponding to the second DC/DC power converter, wherein the at least two load output ends of the power module comprise a first load output end, the first load output end has a first load positive output end and a first load negative output end, the first output end of the first DC/DC power converter has a first positive output end and a first negative output end, and the second output end of the second DC/DC power converter has a second positive output end and a second negative output end; and
that the switching unit is configured to control the first output end of the first DC/DC power converter and the second output end of the second DC/DC power converter to be coupled to any one of the at least two load output ends of the power module specifically comprises:
the first switching subunit is configured to: control the first positive output end of the first DC/DC power converter to be coupled to the first load positive output end of the power module, and control the first negative output end of the first DC/DC power converter to be coupled to the second positive output end of the second DC/DC power converter; and the second switching subunit is configured to control the second negative output end of the second DC/DC power converter to be coupled to the first load negative output end of the power module.

8. The power module according to any one of claims 1 to 4, wherein the switching unit comprises a first switching subunit corresponding to the first DC/DC power converter, wherein one end of the first switching subunit is coupled to the first output end of the first DC/DC power converter, the other end of the first switching subunit is coupled to one end of a third switching subunit, the other end of the third switching subunit is coupled to a third output end of a third DC/DC power converter, and the third DC/DC power converter and the first DC/DC power converter are not in a same power module;
the at least two load output ends of the power module comprise a first load output end, the first load output end has a first load positive output end and a first load negative output end, the first output end of the first DC/DC power converter has a first positive output end and a first negative output end, and the third output end of the third DC/DC power converter has a third positive output end and a third negative output end; and
that the switching unit is configured to control the first output end of the first DC/DC power converter and the second output end of the second DC/DC power converter to be coupled to any one of the at least two load output ends of the power module specifically comprises:
the first switching subunit is configured to: control the first positive output end of the first DC/DC power converter to be coupled to the first load positive output end of the power module, and control the first negative output end of the first DC/DC power converter to be coupled to the third positive output end of the third DC/DC power converter; and the third switching subunit is configured to control the third negative output end of the third DC/DC power converter to be coupled to the first load negative output end of the power module.

9. The power module of any one of claims 1 to 8, wherein the switching unit can comprise at least one of a mechanical switch and a semiconductor switch.

10. A charging pile, wherein the charging pile comprises a power module and at least two charging connectors, and the power module comprises a power input end, a first DC/DC power converter, a second DC/DC power converter, a switching unit, and at least two load output ends, wherein the first DC/DC power converter comprises a first input end and a first output end, and the second DC/DC power converter comprises a second input end and a second output end;
the first input end of the first DC/DC power converter and the second input end of the second DC/DC power converter are coupled to a first power supply by using the power input end of the power module, the first output end of the first DC/DC power converter and the second output end of the second DC/DC power converter are coupled to one end of the switching unit, and the other end of the switching unit is coupled to any one of the at least two load output ends of the power module, wherein any one of the at least two load output ends of the power module is correspondingly coupled to any one of the at least two charging connectors;
the first DC/DC power converter and the second DC/DC power converter are configured to convert an output power of the first power supply;
the switching unit is configured to control the first output end of the first DC/DC power converter and the second output end of the second DC/DC power converter to be coupled to any one of the at least two load output ends of the power module; and
the any charging connector is configured to: establish a connection between the any load output end of the power module and an electric vehicle connected to the any charging connector, and provide an output power of the any load output end of the power module for the electric vehicle.

11. The charging pile according to claim 10, wherein the first power supply is an alternating current power supply, and the power module further comprises an AC/DC converter; and
that the first input end of the first DC/DC power converter and the second input end of the second DC/DC power converter are coupled to a first power supply by using the power input end of the power module specifically comprises:
the first input end of the first DC/DC power converter and the second input end of the second DC/DC power converter are coupled to an output end of the AC/DC converter, an input end of the AC/DC converter is coupled to the power input end of the power module, and the power input end of the power module is coupled to the alternating current power supply; and
the AC/DC converter is configured to: convert an alternating current voltage output by the alternating current power supply into a direct current voltage, and separately provide the direct current voltage for the first DC/DC power converter and the second DC/DC power converter.

12. The charging pile according to claim 10 or 11, wherein the first DC/DC power converter comprises N switching transistors, and the second DC/DC power converter comprises M switching transistors, wherein both N and M are greater than 1;
the power module further comprises a first micro control unit (micro control unit, MCU);
the first MCU is coupled to a control end of the N switching transistors, and the first MCU is configured to control conduction duration of the N switching transistors, to control an output power of the first DC/DC power converter; and
the first MCU is further coupled to a control end of the M switching transistors, and the first MCU is further configured to control conduction duration of the M switching transistors, to control an output power of the second DC/DC power converter.

13. The charging pile according to any one of claims 10 to 12, wherein the first DC/DC power converter comprises the N switching transistors, and the second DC/DC power converter comprises the M switching transistors, wherein both N and M are greater than 1;
the power module further comprises a second power supply;
the second power supply is coupled to a power supply end of the N switching transistors, and the second power supply is configured to provide a working voltage for the N switching transistors; and
the second power supply is further coupled to a power supply end of the M switching transistors, and the second power supply is further configured to provide a working voltage for the M switching transistors.

14. A power supply device, wherein the power supply device comprises a first power supply and the power module according to any one of claims 1 to 9, wherein the first power supply is coupled to the power module; and
the power module is configured to convert an output power of the first power supply.
